# EUROPÄISCHE PATENTSCHRIFT

(11) **EP 1 491 661 B1**
(45) Veröffentlichungstag und Bekanntmachung des Hinweises auf die Patenterteilung: **17.08.2005**
(21) Anmeldenummer: 03014221.0
(22) Anmeldetag: 25.06.2003
(51) Int. Cl.: C23G 3/00, B08B 3/14, C02F 3/34

(54) **Vorrichtung zur Reinigung von mit Öl und Fett beschmutzten Maschinenteilen nach Art einer Waschmaschine mit Bioreaktor**
Device for purification of machine parts contaminated by oil and grease of the washing machine type with a bioreactor
Dispositif de nettoyage de pièces de machine polluées par de l'huile et par de la graisse du type machine à laver avec un bioréacteur

(43) Veröffentlichungstag der Anmeldung: 29.12.2004
(73) Patentinhaber: CB Chemie und Biotechnologie GmbH, 33334 Gütersloh (DE)
(72) Erfinder: Berens, Ulrich, 33415 Verl (DE)
(74) Vertreter: Flötotto, Hubert, Dipl.-Ing.

(56) Entgegenhaltungen:
- EP-A- 0 309 432
- WO-A-92/16314
- US-B1- 6 228 180

## Beschreibung

Die Erfindung betrifft eine Vorrichtung zur Reinigung von mit Öl oder Fett verschmutzen Maschinenteilen, umfassend ein mit einem Deckel verschließbares Reinigungsgehäuse, in dem ein Korb zur Aufnahme der verschmutzen Teile angeordnet ist, und wobei ein in dem Gehäuse vorgesehenes von Reinigungsflüssigkeit gespeistes Spritzdüsensystem auf die in dem Korb vorgehaltenen zu reinigenden Teile einwirkt, und einem Bioreaktor zur Aufbereitung der Reinigungsflüssigkeit, wobei die Reinigungsflüssigkeit über eine Abführleitung und eine Zuführleitung zwischen dem Reinigungsgehäuse und dem Bioreaktor in einem geschlossenen Kreislauf vorgesehen ist.

Aus dem Stand der Technik sind so genannte Heißwasserteilemaschinen bekannt, die insbesondere dazu bestimmt sind. Maschinenteile, die mit Öl oder Fett verschmutzt sind, zu reinigen. Dabei vermag die Heißwasserteilemaschine auch die Maschinenteile von so genannten verkrusteten Öl- oder Fettresten zu befreien. Die Heißwasserteilemaschine verfügt dabei über ein Gehäuse, in dem beispielsweise ein Korb vorgehalten wird. In den Korb werden die zu reinigenden Maschinenteile gelegt. Weiter ist in dem Gehäuse beispielsweise ein Hochdrucksystem mit Spezialdüsen untergebracht, welches dafür sorgt, dass eine gründliche Reinigung und Entfettung der Teile vorgenommen wird. Dabei kann beispielsweise der Korb in dem Maschinengehäuse rotieren, so dass eine allseitige Reinigung der öl- und fettverschmutzten Teile in dem Gehäuse vorgenommen werden kann. Um eine effektive Reinigung zu erzielen arbeitet das Hochdruckspritzsystem mit einer Reinigungsflüssigkeit, die bis zu 70°C aufgeheizt wird.

Bei diesem nach dem Stand der Technik bekannten Heißwasserwaschmaschinen bestand immer das Verlangen, die Reinigungsflüssigkeit - und hier insbesondere die schmutzbehaftete Reinigungsflüssigkeit - aufzubereiten, um sie dem Waschprozess wieder zuzuführen. Die beim Reinigungsvorgang sich mit den Öl- und Fettpartikelchen behaftete Reinigungsflüssigkeit wurde daher durch einen so genannten Plattenphasentrenner gleitet, in dem insbesondere sich die Öl- und Fettpartikelchen wieder von der Reinigungsflüssigkeit ablösten, so dass das Öl bzw. Fett auf Grund seines spezifischen Gewichtes im oberen Bereich der Reinigungsflüssigkeit abgeschöpft werden konnte. Im unteren Bereich des Plattenphasentrenners wurde die gereinigte Reinigungsflüssigkeit gesammelt und wieder dem Waschprozess zugeführt. Bei dieser Art der Aufbereitung insbesondere der Reinigungsflüssigkeit ergibt sich jedoch das Problem, dass insbesondere abgeschiedenes Öl- bzw. Fettrückstände entsorgt werden müssen, so dass bei dieser Art der Waschvorrichtung mit öl- oder fettverschmutzten Teilen ein geschlossenes System nicht gegeben ist.

So ist beispielsweise aus dem Stand der Technik gemäß der WO 92/16314 eine Vorrichtung zur Reinigung von mit Öl oder Fett verschmutzten Maschinenteilen bekannt. Die Vorrichtung umfasst dabei eine Reinigungskammer, die mit einem Spritzdüsensystem versehen ist, wobei die Reinigungsflüssigkeit derart in der Kammer versprüht wird, dass sie auf das zu reinigende Teil einwirkt. Mit dem Reinigungsgehäuse in Verbindung steht eine Aufbereitungseinrichtung, die insbesondere die Reinigungsflüssigkeit mit so genannten Additiven versetzt. Dieser Aufbereitungseinrichtung für die Reinigungsflüssigkeit kann optional ein so genannter Bioreaktor beigeordnet werden, der insbesondere die Reinigungsflüssigkeit von verunreinigenden Stoffen wie Öl und anderen organischen Stoffen befreit. Mit dieser bekannten Vorrichtung ist es nicht möglich, hohe Temperaturen zu fahren, um die Maschinenteile zu reinigen. Der Bioreaktor ist mittelbar in den Kreislauf der Reinigungsflüssigkeit eingebunden, wobei er nur in einem Sekundärkreis gefahren wird, um auf diese Weise die Reinigungsflüssigkeit von organischen Stoffen zu befreien.

Hieraus ergibt sich die der Erfindung zu Grunde liegende Aufgabe, eine Vorrichtung zur Reinigung von mit öl- oder fettverschmutzten Maschinenteilen bereitzustellen, die aus einer Reinigungskammer und einem Bioreaktor gebildet wird, die den Einsatz eines Hochtemperatur- und Hochdruckspritz-Systems ermöglicht.

Diese Aufgabe wird erfindungsgemäß durch den Hauptanspruch gelöst. Vorteilhafte Ausgestaltungen und Weiterbildungen ergeben sich aus den Unteransprüchen.

Zur Aufbereitung der Reinigungsflüssigkeit wirkt der Bioreaktor direkt über eine Abführ- und Zuführleitung mit dem Reinigungsgehäuse zusammen, wobei zwischen dem Reinigungsgehäuse und dem Bioreaktor im angeschlossenen Kreislauf die Reinigungsflüssigkeit zirkuliert. Insbesondere in der Abführleitung sind Mittel zur Temperaturregulierung der Reinigungsflüssigkeit für den Bioreaktor vorgesehen. Auf Grund dieser Ausbildung ist es möglich geworden, dass insbesondere ein Bioreaktor mit einer derartig bekannten Heißwasserteilewaschmaschine arbeiten kann, so dass kostenaufwendige Öl- oder Fettrestentsorgungen sich erübrigen. Aufgrund der Temperaturdifferenz zwischen der Waschmaschine einerseits und dem Bioreaktor andererseits wird in vorteilhafter Weise erreicht, dass die Reinigungsflüssigkeit in einem geschlossenen Kreislauf gefahren werden kann, da durch den Bioreaktor, in dem die Bakterien in einem Temperaturniveau leben, die organischen Verschmutzungen aufgezehrt werden. Hierzu wird die auf vorzugsweise 70°C aufgeheizte Reinigungsflüssigkeit in der Abführleitung die zum Bioreaktor geführt wird, mit Mitteln zur Temperaturregulierung auf das für die Bakterien bevorzugte Temperaturniveau von vorzugsweise 37°C abgekühlt, so dass ein Sterben der Bakterien unterbunden wird. Entsprechend wird der der Vorrichtung entzogene Volumenstrom an Reinigungsflüssigkeit über die Zuführleitung der Vorrichtung wieder zugeführt, so dass sich ein geschlossener Kreislauf einstellt, der ohne die Entsorgung von Ölen oder Fetten arbeitet.

Wie schon erwähnt kann hierbei der Bioreaktor beispielsweise zur Begünstigung der Bakterienkultur vorzugsweise in einem Temperaturbereich von 35° bis 40°C gefahren werden, wohingegen die Reinigungsflüssigkeit in der Vorrichtung vorzugsweise mit einer Temperatur von 50 - 80°C gefahren werden kann. Die Betriebstemperatur in der Vorrichtung kann auch durchaus höher gefahren werden, wenn es insbesondere erforderlich ist, beispielsweise verkrustete Öl- oder Fettreste von den Maschinenteilen zu lösen, so dass sich eine effektivere Reinigung der in dem Korb vorgehaltenen Maschinenteile ergibt.

Die mit Schmutz behaftete heiße Reinigungsflüssigkeit strömt, bevor Sie über die Abführleitung in den Bioreaktor strömt, durch einen Wärmetauscher, der die Reinigungsflüssigkeit auf die Temperatur des Reaktors abkühlt. Der Wärmetauscher kühlt die verschmutzte Reinigungsflüssigkeit zunächst auf ein Temperaturniveau herunter, das der eingestellten Reaktortemperatur entspricht. Um sicherzugehen, dass insbesondere auch das Temperaturniveau des Reaktors konstant bleibt, ist in der Abführleitung zwischen dem Wärmetauscher und dem Bioreaktor ein temperaturgesteuertes Ventil angeordnet, welches nur dann öffnet, wenn die Bioreaktortemperatur erreicht ist, also einen Temperaturbereich einnimmt, der zwischen 36° und 38°C liegt. Somit kann es nicht zu einer Überhitzung des Bioreaktors kommen, weil insbesondere dies schädlich für die in dem Bioreaktor vorgehaltenen Bakterienkulturen ist. Die Bakterienkulturen sind dabei in einem Horizont in dem Reaktor vorgesehen, wobei die einzelnen Bakterien dabei auf Netzböden angeordnet sein können, so dass die verschmutzte Flüssigkeit von unten her durch diese an den Netzstrukturen haftenden Bakterien geleitet wird.

Um den Kreislauf der Reinigungsflüssigkeit zu steuern bzw. zu beschleunigen ist zwischen dem Wärmetauscher und dem Ventil eine die Reinigungsflüssigkeit umwälzende Pumpe vorgesehen. Nach einer besonders vorteilhaften Weiterbildung des Bioreaktors strömt in dem Bioreaktor zur Begünstigung der Bakterien Luft ein. Diese Luft wird mittels einer Pumpe im unteren Bereich des Reaktors eingeblasen, so dass die Luftblasen durch die auf den Netzböden angeordneten Bakterien aufsteigen.

Nach einer besonders vorteilhaften Weiterbildung des Bioreaktors ist im oberen Bereich des Bioreaktors eine Kammer bzw. ein Überlauf zur Aufnahme der aufbereiteten Reinigungsflüssigkeit angeordnet. Die beim Durchströmen der Bakterienkulturen von den Öl- und Fettpartikelchen befreite Reinigungsflüssigkeit wird durch weitere zuströmende verschmutzte Reinigungsflüssigkeit in einen Überlauf oder in eine Überlaufkammer gedrückt, so dass in dieser dann die gereinigte aufbereitete Reinigungsflüssigkeit vorgehalten wird. Mit dem Überlauf verbunden ist die Zuführleitung, die wiederum das Spritzdüsensystem speist. Somit ergibt sich ein umlaufender, zirkulierender Reinigungsflüssigkeitsstrom für eine Heißwasserteilemaschine, die insbesondere als geschlossenes System arbeitet, wobei in vorteilhafter Weise keine zu entsorgenden Öl- oder Fettreste anfallen, die hinsichtlich ihrer Entsorgung sehr kostenintensiv sind.

Nach einer besonders vorteilhaften Weiterbildung der Erfindung wird für die Vorrichtung eine Steueranordnung vorgesehen, die die Pumpe, das Ventil sowie die Luftzufuhr für den Bioreaktor regelt. Die Steueranordnung sorgt somit dafür, dass entsprechend die Pumpe betätigt wird, wenn die Reinigungsflüssigkeit ein bestimmtes Temperaturniveau erreicht hat, wobei auch entsprechend des Reinigungsgrades bzw. der Reinigungseffizienz des Bioreaktors entsprechend Luft zugeführt wird, um auf diese Weise eine optimal arbeitende Bioreaktorkultur vorzuhalten.

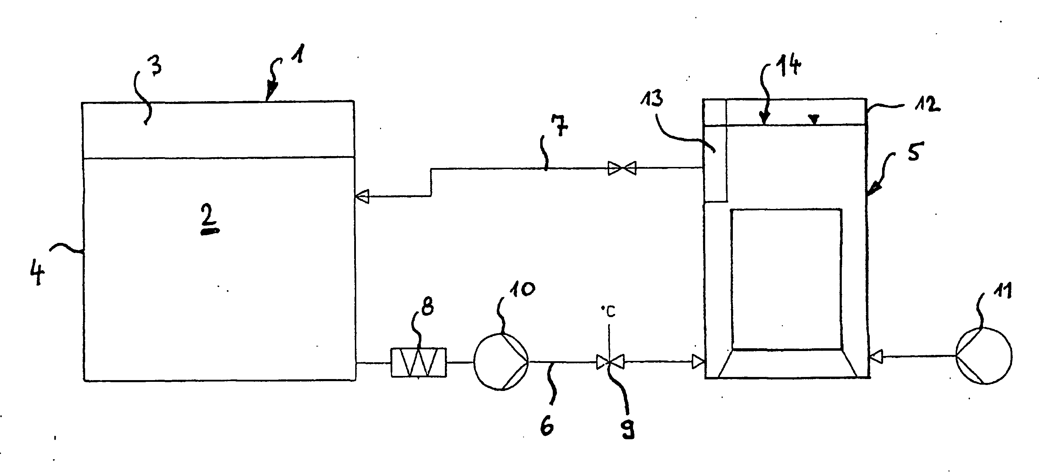

Ein Ausführungsbeispiel der Erfindung wird an Hand der nachstehenden einzigen Figur näher erläutert.

Die einzige Figur zeigt eine schematische Darstellung einer Vorrichtung 1 zur Reinigung von mit öl- oder fettverschmutzten Maschinenteilen nach Art einer Waschmaschine 2, welche im wesentlichen ein mit einem Deckel 3 verschließbares Gehäuse 4 umfasst. In dem Gehäuse 4 befindet sich ein nicht näher dargestellter Korb zur Aufnahme der verschmutzten Teile, wobei auch ebenfalls nicht näher dargestellt in dem Gehäuse 4 ein insbesondere von heißer Reinigungsflüssigkeit gespeistes Spritzdüsensystem angeordnet ist, welches auf die in dem Korb vorgehaltenen zu reinigenden Teile einwirkt.

Dabei wirkt erfindungsgemäß zur Aufbereitung der Reinigungsflüssigkeit die Vorrichtung 1 mit einem Bioreaktor 5 zusammen, wobei die Reinigungsflüssigkeit über eine Abführleitung 6 und einer Zuführleitung 7 zwischen der Vorrichtung 1 und dem Bioreaktor 5 in einem geschlossenen Kreislauf zirkuliert. Dabei sind insbesondere in der Abführleitung 6 Mittel zur Temperaturregulierung der Reinigungsflüssigkeit vorgesehen. Wie aus der Darstellung zu erkennen ist, arbeitet der Bioreaktor 5 zur Begünstigung der Bakterienkultur, die im Wesentlichen im unteren bis mittleren Bereich des Bioreaktors 5 vorgehalten werden, vorzugsweise in einem Temperaturbereich von 36° bis 38°C. Die Reinigungsflüssigkeit selbst in der Vorrichtung 1 wird vorzugsweise auf eine Temperatur von 70°C aufgeheizt, um insbesondere sicher zu stellen, dass sich verkrustete Öl- und Fettrückstände unter Zuhilfenahme des Hochdruckspritzdüsensystems von den Maschinenteilen lösen.

Wie aus der schematischen Darstellung der einzigen Figur zu erkennen ist, ist im unteren Bereich der Waschmaschine 2 eine Abführleitung 6 vorgesehen, durch die die mit Schmutz behaftete heiße Reinigungsflüssigkeit, bevor sie in den Bioreaktor 5 strömt, durch einen Wärmetauscher 8 fließt, der die Reinigungsflüssigkeit auf das Temperaturniveau des Reaktors 5 abkühlt. In der Abführleitung 6 ist zwischen dem Wärmetauscher 8 und dem Bioreaktor 5 ein temperaturgesteuertes Ventil 9 angeordnet, so dass eine kontrollierte Zufuhr von für den Bioreaktor 5 erforderlich temperierter Reinigungsflüssigkeit zur Verfügung gestellt wird. Hierdurch wird sichergestellt, dass es zu keiner Überhitzung des Bioreaktors 5 kommt, damit insbesondere die Bakterienkulturen in ihrer begünstigenden Umgebung leben können. Dabei ist vorzugsweise zwischen dem Wärmetauscher 8 und dem Ventil 9 eine die Reinigungsflüssigkeit umwälzende Pumpe 10 vorgesehen. Die Pumpe 10 saugt einerseits aus der Waschmaschine 2 die verschmutzte Reinigungsflüssigkeit, so dass diese über den Wärmetauscher 8 strömt und drückt andererseits die abgekühlte Reinigungsflüssigkeit durch das temperaturgesteuerte Ventil 9 in den unteren Bereich des Bioreaktors 5. In Folge des Einströmens wird die verschmutzte Reinigungsflüssigkeit durch die in dem Bioreaktor 5 angeordneten Bakterienkulturen geführt, so dass die Öl- und Fettreste von diesen verzehrt werden.

Um insbesondere die Bakterienkultur hinsichtlich ihres Lebensumfeldes zu begünstigen strömt in dem Bioreaktor 5 Luft über eine Leitung ein, wobei die Luft über eine Pumpe 11 angesaugt wird.

In vorteilhafter Weiterbildung der Erfindung ist im oberen Bereich 12 des Bioreaktors 5 eine Kammer bzw. ein Überlauf 13 zur Aufnahme der aufbereiteten Reinigungsflüssigkeit angeordnet, wobei der Flüssigkeitsstand der aufbereiteten Reinigungsflüssigkeit in dem Bioreaktor 5 mit dem Bezug 14 bezeichnet ist. Es versteht sich nun von selbst, dass die gereinigte Reinigungsflüssigkeit in Folge des Überlaufs in die Kammer bzw. in den Überlauf 13 einströmt, an dem die Zuführleitung 7 angeschlossen ist. Über die Zuführleitung 7 gelangt die Reinigungsflüssigkeit wieder in das Gehäuse 4 der Waschmaschine 2, so dass sie für den Waschvorgang wieder verwendet werden kann und somit das Spritzdüsensystem wieder speist. Die Vorrichtung 1 zeichnet sich somit dadurch aus, dass eine Heißwasserteilewaschmaschine hier in einem geschlossenen System gefahren werden kann, ohne dass Rückstände wie Öle oder Fette anfallen, dessen Entsorgungskosten aufgrund von Verbrennungsvorschriften sehr hoch sind. Aufgrund der geschlossenen Funktionsweise dieser Vorrichtung 1 ergibt sich wirtschaftlich gesehen auch eine geringe Amortisationszeit.

Gemäß einer Weiterbildung der Erfindung kann eine ebenfalls nicht näher dargestellt Steuerungsanordnung für die Vorrichtung verwendet werden, die insbesondere den Wärmetauscher 8 einerseits, die Pumpe 10, das Ventil 9 sowie die Pumpe 11 für die Luftzufuhr für den Bioreaktor 5 regelt, so dass die Anlage in einem optimalen Bereich gefahren werden kann.

## Patentansprüche

1. Vorrichtung (1) zur Reinigung von mit Öl oder Fett verschmutzen Maschinenteilen, umfassend:
ein mit einem Deckel (3) verschließbares Reinigungsgehäuse (4), in dem ein Korb zur Aufnahme der verschmutzen Teile angeordnet ist, und wobei ein in dem Gehäuse vorgesehenes von Reinigungsflüssigkeit gespeistes Spritzdüsensystem auf die in dem Korb vorgehaltenen zu reinigenden Teile einwirkt, und
einen Bioreaktor (5) zur Aufbereitung der Reinigungsflüssigkeit, wobei die Reinigungsflüssigkeit über eine Abführleitung (6) und eine Zuführleitung (7) zwischen dem Reinigungsgehäuse (4) und dem Bioreaktor (5) in einem geschlossenen Kreislauf vorgesehen ist,
**dadurch gekennzeichnet,**
**dass** in der Abführleitung (6) ein Wärmetauscher (8) zur Abkühlung der Reinigungsflüssigkeit auf des Temperaturniveau des Reaktors angeordnet ist. und wobei zwischen dem Wärmetauscher (8) und dem Bioreaktor (5) ein Ventil (9) angeordnet ist, welches für die Reinigungsflüssigkeit nur bei Temperaturniveau des Bioreaktors (5) geöffnet ist.

2. Vorrichtung nach Anspruch 1, **dadurch gekennzeichnet, dass** zwischen dem Wärmetauscher (8) und dem Ventil (9) eine die Reinigungsflüssigkeit umwälzende Pumpe (10) vorgesehen ist.

3. Vorrichtung nach Anspruch 1, **dadurch gekennzeichnet, dass** der Bioreaktor (5) zur Begünstigung der Bakterienkultur einen Temperaturbereich von 35°C bis 40°C aufweist.

4. Vorrichtung nach Anspruch 1, **dadurch gekennzeichnet, dass** die Reinigungsflüssigkeit in der Vorrichtung (1) einen Temperaturbereich von 50°C - 80°C aufweist.

5. Vorrichtung nach einem oder mehreren der vorhergehenden Ansprüche 1 bis 4, **dadurch gekennzeichnet, dass** der Bioreaktor (5) zur Begünstigung der Bakterien mit Luft durchsetzt ist.

6. Vorrichtung nach Anspruch 5, **dadurch gekennzeichnet, dass** im oberen Bereich (12) des Bioreaktors (5) eine Kammer bzw. ein Überlauf (13) zur Aufnahme der aufbereiteten Reinigungsflüssigkeit angeordnet ist.

7. Vorrichtung nach Anspruch 6. **dadurch gekennzeichnet, dass** der Überlauf (13) mit der Zuführleitung (7) verbunden ist, die mit dem Spritzdüsensystem verbunden ist.

8. Vorrichtung nach einem oder mehreren der Ansprüchen 1 bis 7, **dadurch gekennzeichnet, dass** eine Steueranordnung den Wärmetauscher (8), die Pumpe (10), das Ventil (9), sowie die Pumpe (11) für die Luftzufuhr für den Bioreaktor (5) regelt.

## Claims

1. Device (1) for purification of machine parts contaminated by oil and grease, comprising:
a purification housing (4) which can be locked with a lid (3), in which a basket for receiving the contaminated parts is arranged, and in which a spray nozzle system fed by purifying fluid provided in the housing acts upon the parts to be purified which are provided in the basket and
a bioreactor (5) for treating the purifying fluid, where the purifying fluid is provided in a closed circuit via a discharge line (6) and a supply line (7) between the purification housing (4) and the bioreactor (5),
***characterised in that***
a heat exchanger (8) for cooling the purifying fluid to the temperature level of the reactor is located in the discharge line (6) and where a valve (9) is located between the heat exchanger (8) and the bioreactor (5), which valve is opened for the purifying fluid only at the temperature level of the bioreactor (5).

2. Device as claimed in Claim 1, ***characterised in that*** a pump (10) which circulates the purifying fluid is provided between the heat exchanger (8) and the valve (9).

3. Device as claimed in Claim 1, ***characterised in that*** the bioreactor (5) has a temperature range of 35°C to 40°C in order to favour the bacteria culture.

4. Device as claimed in Claim 1, ***characterised in that*** the purifying fluid in the device (1) has a temperature range of 50°C - 80°C.

5. Device as claimed in one or more of the foregoing Claims 1 to 4, ***characterised in that*** the bioreactor (5) has an air throughput to favour the bacteria.

6. Device as claimed in Claim 5, ***characterised in that*** in the upper area (12) of the bioreactor (5) a chamber or an overflow (13) is located in order to receive the treated purifying fluid.

7. Device as claimed in Claim 6, ***characterised in that*** the overflow (13) is connected to the supply line (7) which is connected to the spray nozzle system.

8. Device as claimed in one or more of Claims 1 to 7, ***characterised in that*** a control arrangement controls the heat exchanger (8), the pump (10), the valve (9) as well as the pump (11) for supplying the air to the bioreactor.

## Revendications

1. Dispositif (1) de nettoyage de pièces de machines contaminées par de l'huile ou de la graisse, comprenant :
un boîtier de nettoyage (4) pouvant être fermé avec un couvercle (3), dans lequel est disposé un panier destiné à recevoir les pièces contaminées, et dans lequel un système de pulvérisateur prévu dans le boîtier et alimenté en liquide de nettoyage agit sur les pièces à nettoyer placées au préalable dans le panier, et
un bioréacteur (5) destiné à préparer le liquide de nettoyage, dans lequel le liquide de nettoyage est prévu, par une conduite de vidange (6) et une conduite d'alimentation (7), selon un circuit fermé entre le boîtier de nettoyage (4) et le bioréacteur (5),
**caractérisé en ce que** dans la conduite de vidange (6) est disposé un échangeur de chaleur (8) destiné à refroidir le liquide de nettoyage au niveau de la température du réacteur, et dans lequel est disposée entre l'échangeur de chaleur (8) et le bioréacteur (5) une soupape (9) qui est ouverte pour le passage du liquide de nettoyage uniquement au niveau de température du bioréacteur (5).

2. Dispositif selon la revendication 1, **caractérisé en ce qu'**entre l'échangeur de chaleur (8) et la soupape (9) est prévue une pompe (10) de circulation du liquide de nettoyage.

3. Dispositif selon la revendication 1, **caractérisé en ce que** le bioréacteur (5), pour favoriser la culture bactérienne, présente une gamme de températures de 35 °C à 40 °C.

4. Dispositif selon la revendication 1, **caractérisé en ce que** le liquide de nettoyage dans le dispositif (1) présente une gamme de températures de 50 °C à 80 °C.

5. Dispositif selon une ou plusieurs des revendications 1 à 4 précédentes, **caractérisé en ce que** le bioréacteur (5) est parcouru par de l'air pour favoriser les bactéries.

6. Dispositif selon la revendication 5, **caractérisé en ce que** dans la zone supérieure (12) du bioréacteur (5) est disposée une chambre ou un déversoir (13) destiné à recevoir le liquide de nettoyage préparé.

7. Dispositif selon la revendication 6, **caractérisé en ce que** le déversoir (13) est relié à la conduite d'alimentation (7) qui est reliée au système de pulvérisateur.

8. Dispositif selon une ou plusieurs des revendications 1 à 7, **caractérisé en ce qu'**un dispositif de commande régule l'échangeur de chaleur (8), la pompe (10), la soupape (9), ainsi que la pompe (11) d'amenée d'air vers le bioréacteur (5).
